Europäisches Patentamt

(19) European Patent Office

Office européen des brevets

(11) EP 0 704 342 A2

(12) **EUROPEAN PATENT APPLICATION**

(43) Date of publication:
03.04.1996 Bulletin 1996/14

(51) Int. Cl.⁶: $B60Q\ 1/46$, $B60Q\ 1/30$, $B60Q\ 1/50$, $B60J\ 1/20$

(21) Application number: 95115170.3

(22) Date of filing: 26.09.1995

(84) Designated Contracting States:
DE FR GB IT

(30) Priority: 30.09.1994 JP 238277/94
21.10.1994 JP 257196/94

(71) Applicants:
• FUJIKURA LTD.
Koto-ku Tokyo (JP)
• FUJIKURA KASEI CO., LTD.
Itabashi-Ku Tokyo-To (JP)

(72) Inventors:
• Anzai, Hidenobu
Itabashi-ku, Tokyo (JP)

• Akashi, Kazuya
Inbagun, Chiba-ken (JP)
• Edamura, Kazuya,
Fujikura Kasei Co., Ltd.
Tokyo (JP)
• Otsubo, Yasufumi
Chiba-shi, Chiba-ken (JP)

(74) Representative: Grünecker, Kinkeldey,
Stockmair & Schwanhäusser
Anwaltssozietät
Maximilianstrasse 58
D-80538 München (DE)

(54) **Transmitted light intensity control device with fluid composition**

(57) A transmitted light intensity control device fitted in an automobile for controlling a transmitted quantity of light. The device comprises a hollow housing (18) having two transparent surface sections (15) disposed in opposed relation to each other. A display section (40) and a non-display section (41) are formed in the transparent surface sections (15) to be separated from each other, and transparent conductive layers (17) are formed on the display section (40) and the non-display section (41). The transparent conductive layers (17) on the display section (40) are configured to have a shape indicative of a specific picture word. When a voltage is applied to the transparent conductive layers (17) on the display section (40), the picture word display takes place.

FIG. 1

**Description**

Background of the Invention

[Field of the Invention]

The present invention relates to a transmitted light intensity control device with a fluid composition, which is applicable particularly, but not exclusively, to hazard display devices and windows in automobiles.

[Description of the Prior Art]

An automobile is equipped with hazard lamps which are used to inform other motorist that the automobile is stopped on the road because of troubles or the like and hence to prevent the other motorists from coming into collision with the stopped automobile. A serious problem arises in the use of such hazard lamps, that is the running down of the cars battery that occurs if no power is generated while the automobile is stopped and the engine is not running for a relatively long time. In addition, in the case in which half of the automobile is out of sight due to the presence of other automobiles parked behind it, there is the possibility that the drivers of the on coming automobiles misconceive the hazard lamps as a turn direction indicator. Thus, improvement in the visibility of the hazard lamps of automobiles is required.

Furthermore, in automobiles, sun shading curtains or light-shielding films can be used for sunlight shielding purposes. However, the attachment of such curtains needs fittings and is troublesome. On the other hand, if the light-shielding films are attached onto the car windows, the sunlight is always shielded irrespective of the brightness of the sun. Accordingly, there is sometimes the need for removing the light-shielding films when the drivers needs the sunlight, for example, in winter or the like, while the removing work of the film is troublesome.

Summary of the Invention

It is therefore an object of the present invention to provide a transmitted light intensity control device which is capable of controlling the transmitted light intensity and useful for use in automobiles.

One feature of the present invention is the utilization of an electro-optical fluid composition (hereinafter referred to as an EA fluid). This composition is a fluid produced by, for example, dispersing solid particles in an electrical insulating medium, and in response to application of an electric field thereto, the solid particles establish dielectric polarization, and are coordinate-linked with each other and arranged or aligned in the field direction due to the electrostatic attractive force caused by the dielectric polarization, thus producing chain bodies (configurations). In addition, some of solid particles have an electrophoretic property, and in response to application of an electric field thereto, are electrophoretically moved toward electrode sections to be arranged and oriented to take an arranged massive structure. The fact that the arrangement and orientation of particles take place under an electric field is called an electric field arrangement effect, and the solid particles which take such an electric alignment effect are referred to as electric alignment particles (EA particles). The operational principle of the EA fluid will become apparent as the description proceeds.

According to the present invention, there is provided a hazard display device fitted in at least a portion of an automobile back glass for informing drivers of other automobiles of the presence of the automobile, comprising: a hollow housing having two surfaces which are disposed in opposed relation to each other and at least a portion of each of which is transparent, a display section and a non-display section being formed in the transparent portions of the two opposed surfaces of the housing; display section transparent conductive layers formed on transparent opposed portions of the display section so as to have a specific configuration indicative of a hard mark; non-display section transparent conductive layers formed on transparent opposed portions of the non-display section; and an electro-optical fluid composition produced by dispersing electric alignment particles in an electrical insulating medium and packed within the housing.

Preferably, the non-display section transparent conductive layers are formed to be separated from the display section transparent conductive layers, and the specific configuration of the display section transparent conductive layers is a substantially equilateral triangle representative of a picture word for hazard warning.

Furthermore, according to the present invention, there is provided a sunscreen device for an automobile which controls the quantity of sunlight coming in the automobile, comprising: a hollow housing having two surfaces which are disposed in opposed relation to each other and at least a portion of each of which is transparent; a first transparent conductive layer formed on the transparent portion of one of the opposed surfaces of the housing; a second transparent conductive layer formed on the transparent portion of the other surface of the opposed surfaces thereof; and an electro-optical fluid composition produced by dispersing electric alignment particles in a electrical insulating medium and packed within the housing.

In addition, the first transparent conductive layer is formed to substantially cover the whole of the transparent portion of the one of the opposed surfaces of the housing, and the second transparent conductive layer is composed of first and second comb-like sections which substantially cover the whole of the transparent portion of the other surface of the housing, tooth portions of the first comb-like section being alternately placed in spaces between tooth portions of the second comb-like section.

Brief Description of the Drawings

The object and features of the present invention will become more readily apparent from the following detailed description of the preferred embodiments taken in conjunction with the accompanying drawings in which:

Fig. 1 is a front elevational view showing a hazard display device according to the first embodiment of the present invention;

Fig. 2 is a cross-sectional view taken along a line X-X in Fig. 1;

Fig. 3 is an explanatory illustration of a state of EA particles of the Fig. 1 or 2 hazard display device in the case that its transparent conductive layers are not in electric field;

Fig. 4 is an explanatory illustration of an oriented state of EA particles of the Fig. 1 or 2 hazard display device in a case where its transparent conductive layers are in electric field;

Fig. 5 is a cross-sectional view showing one example of each of the EA particles in the present invention;

Fig. 6 is an explanatory illustration of chain structure columns made up of the EA particles in the present invention;

Fig. 7 is a explanatory illustration of column structure formed by EA particles in an electric field;

Fig. 8 is an explanatory illustration of a colored EA particle in the present invention;

Fig. 9 is a front elevational view showing another picture word pattern in the first embodiment of the present invention;

Fig. 10 is an illustration of a modification of the Fig. 1 picture word;

Fig. 11 is a front elevational view showing a sunscreen device for automobiles according to the second embodiment of the present invention;

Fig. 12 is a cross-sectional view taken along a line X-X in Fig. 11;

Fig. 13 is a block diagram showing a control system for the sunscreen device according to the second embodiment;

Fig. 14 is a schematic diagram of an automobile sunscreen device according to a third embodiment of the present invention;

Fig. 15 is an explanatory illustration of a state of EA particles in the third embodiment in the case that a first comb-like section is electrically connected with a second comb-like section;

Fig. 16 is a graphic illustration of the transmitted light intensity as a function of the EA particle concentration and the strength of the electric field to be applied for EA fluid dispersed in an insulating medium with a viscosity of 10 cSt;

Fig. 17 is a graphic illustration of the transmitted light intensity as a function of the EA particle concentration and the strength of the electric field to be applied for EA fluid dispersed in an insulating medium with a viscosity of 50 cSt;

Fig. 18 is a graphic illustration of the transmitted light intensity as a function of the EA particle concentration and the strength of the electric field to be applied for EA fluid dispersed in an insulating medium with a viscosity of 100 cSt;

Fig. 19 is a graphic illustration of the transmitted light intensity in accordance with the parameters of the kinematic viscosity of an electrical insulating medium and the strength of the electric field for an EA fluid at a particle concentration is 5.0% by weight;

Fig. 20 is a graphic illustration of the transmitted light intensity in accordance with the parameters of the kinematic viscosity of an electrical insulating medium and the strength of the electric field for a EA fluid at a particle concentration is 7.5% by weight;

Fig. 21 is a graphic illustration of the relationship between the energization time to electrodes and the transmitted light intensity in the case of using the EA fluid produced by dispersing 7% by weight of EA particles in a silicone oil having a kinematic viscosity of 10 cSt;

Fig. 22 is a graphic illustration of the wavelength dependence of the transmitted light intensity for the EA fluid produced by adding 4% by weight of blue-colored EA particles into a silicone oil having a kinematic viscosity of 10 cSt;

Fig. 23 is a graphic illustration of the wavelength dependence of the transmitted light intensity in the case of the measurement of the transmitted light intensity of only an electrical insulating medium made of a dimethyl silicone oil containing 0.1% by weight of a blue dye;

Fig. 24 is a graphic illustration of the wavelength dependence of the transmitted light intensity for an EA fluid in which 5% by weight of yellow-colored EA particles are dispersed in a silicone coil (electrical insulating medium) containing 0.1% by weight of a blue-colored dye; and

Fig. 25 is a graphic illustration of the wavelength dependence of the transmitted light intensity for the EA fluid produced by adding 4% by weight of blue-colored EA particles into a silicone oil having a kinematic viscosity of 10 cSt.

Description of the Preferred Embodiment

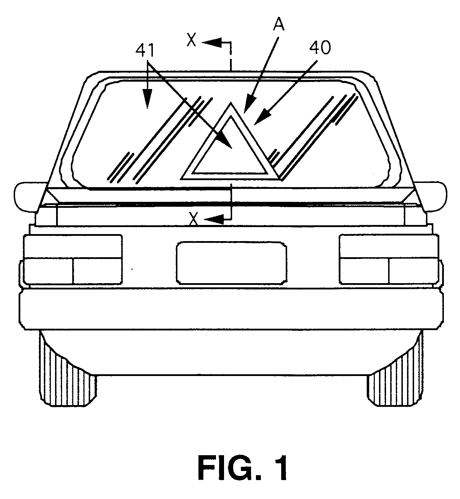

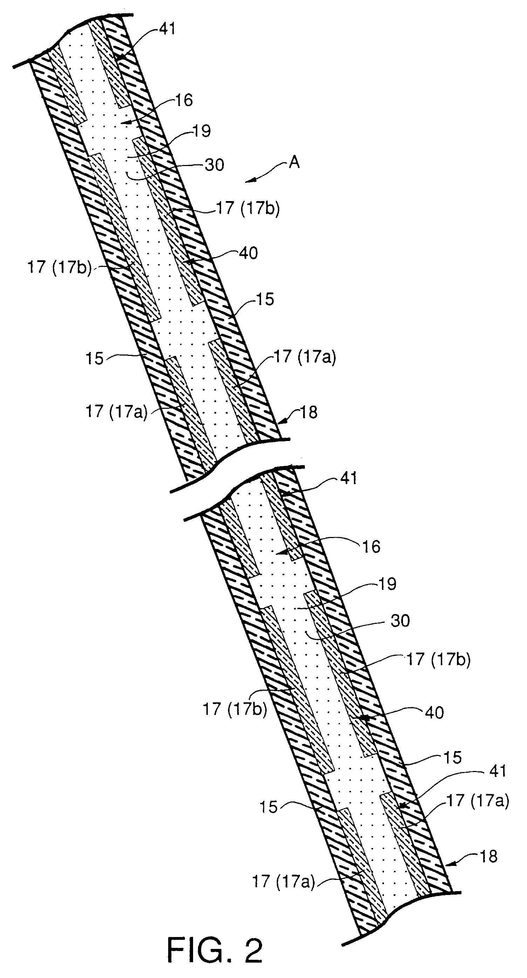

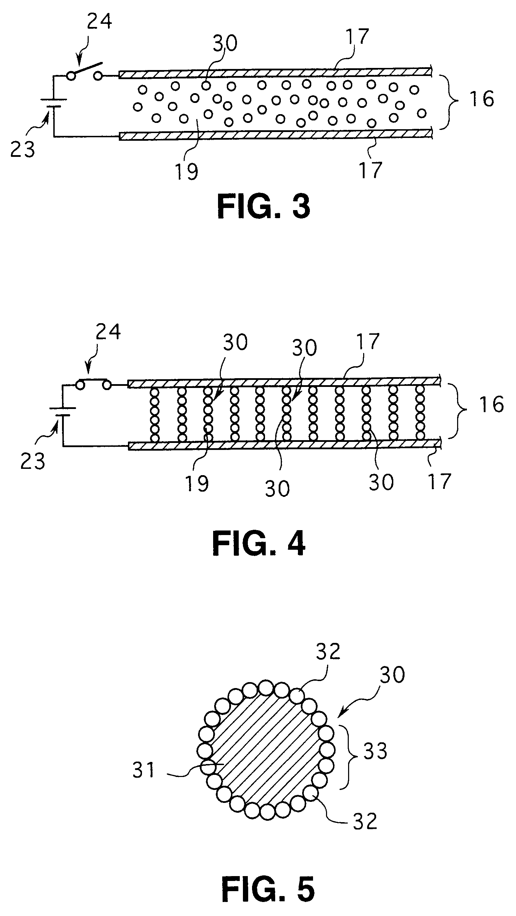

Referring to Figs. 1 and 2, a description will be made hereinbelow of a hazard display device according to the first embodiment of the present invention. A hazard display device, designated by character A, is placed on a rear windshield of an automobile (motor vehicle) as shown in Fig. 1, and as shown in a cross-sectional view of Fig. 2. It is provided with a pair of transparent substrates (plates) 15, 15 spaced by a given distance from each other and disposed parallel to each other. Transparent conductive layers 17 are coated and formed on the inner surfaces of these transparent substrates 15, 15 which are in opposed relation to each other, and an electro-optical fluid composition (hereinafter referred to as an EA fluid) 16, mentioned above, is sealed between the transparent substrates 15, 15. Although in Fig. 1 the hazard display device is attached or formed onto the rear windshield of the automobile, the present invention is not limited to this mode and the attachment onto the windshield or door window is also possible. In addition, a sealing member, not shown, is placed at the circumferential edge sections of the transparent substrates 15, 15 and the EA fluid 16 is encased or packed within a hollow and transparent plate-like housing 18 configured with the transparent substrates 15, 15 and the sealing member. Further, as shown in Figs. 3 and 4, electrode sections electrically coupled to the transparent conductive layers 17, 17 are formed at the circumferential edge sections of the transparent substrates 15, 15 and connected through a switch 24 to a power supply 23.

The foregoing transparent substrates 15, 15 are required to hold the EA fluid 16 therebetween and have strength enough to with stand transport and installation, and hence, are preferable to be made of transparent resin substrates constructed with glass plates, acrylic resins or the like. There is no need for the whole of the transparent substrates 15, 15 to be transparent, while it is possible that they are made to be transparent at only portions where light transmission is needed. Accordingly, it is allowed that the circumferential section is made with an opaque metallic frame or resin frame, whereas a transparent glass plate or resin plate is fitted in the frame. Further, although its configuration is not limited, a plate-like configuration is common.

The EA fluid 16 is basically produced with inorganic and organic composite particles (hereinafter referred to as EA particles) 30 which have a structure as shown in Fig. 5 being dispersed in an electrical insulating medium 19. Each of the EA particles 30, as shown in Fig. 5, is composed of a core body 31 made of a polymer compound and a surface layer 33 made of an electric alignment inorganic matter (hereinafter referred to as an inorganic EA material) 32.

As examples of the inorganic EA materials 32 there are inorganic ion exchangers such as hydroxides of polyvalent metals, hydrotalcites, acid salts of polyvalent metals, hydroxyapatite, nashicon-type compounds, clay minerals, potassium titanates, heteropolyacid salts and insoluble ferrocyanides, and further silica gels and electrical semiconductive inorganic matters. When such an inorganic EA material 32 forms the surface layer 33 on the core body 31 made of a polymer compound, the EA fluid 16 the electric alignment effect takes place. For production of the EA particles 30, it is desirable that the surface layer 33 and the core body 31 are formed simultaneously.

Among the organic high-molecular compounds usable for the core bodies 31 of the EA particles 30 are poly(meth)acrylate, (meth)acrylate-styrene copolymer, polystyrene, polyethylene, polypropylene, nitrile rubber, butyl rubber, ABS resin, nylon, polyvinyl butyrate, ionomer, ethylene-vinyl acetate copolymer, vinyl acetate resin, polycarbonate resin and others, mixtures including one or more of these materials, or copolymers.

Furthermore, as preferable materials suitable for the surface layers 33 of the EA particles 30, there are inorganic ion exchangers, electrical semiconductive inorganic matters and silica gels. If the solid particles made with these materials are dispersed in the electrical insulating medium 19, an excellent electric alignment effect takes place. As examples of the inorganic ion exchangers, there are hydroxides of polyvalent metals, hydrotalcites, acid salts of polyvalent metals, hydroxyapatite, nashicon-type compounds, clay minerals, potassium titanates, heteropolyacid salts and insoluble ferrocyanides.

A detailed description will be made hereinbelow in terms of these inorganic ion exchangers.

(1) hydroxides of polyvalent metals

These compounds are represented by a general formula $MO_x(OH)_y$ (M is a polyvalent metal, x is a number above 0, and y denotes a positive number). For example, among the hydroxides of polyvalent metals are titanium hydroxides, zirconium hydroxides, bismuth hydroxides, tin hydroxides, lead hydroxides, aluminum hydroxides, tantalum hydroxides, niobium hydroxides, molybdenum hydroxides, magnesium hydroxides, manganese hydroxides, iron hydroxides and so on. For instance, the titanium hydroxides include hydrous titanium oxides (another name: metatitanic acid or b titanic acid, $TiO(OH)_2$) and titanium hydroxides (another name: orthotitanic acid or a titanic acid, $Ti(OD)_4$). This also applies to other compounds.

(2) hydrotalcites

These compounds are represented by a general formula $M_{13}Al_6(OH)_{43}(CO)_3 \cdot 12H_2O$ (M is a bivalent metal). For example, a bivalent metal M is Mg, Ca, Ni or others.

(3) acid salts of polyvalent metals

These materials include titanium phosphates, zirconium phosphates, tin phosphates, cerium phosphates, chrome phosphates, zirconium arsenates, titanium arsenates, tin arsenates, cerium arsenates, titanium antimonates, tin antimonates, tantaium antimonates, niobium antimonates, zirconium tungstates, titanium vanadates, zirconium molybdates, titanium selenates, tin molybdates, and so on.

(4) hydroxyapatites

These materials include, for example, calcium apatites, lead apatites, strontium apatites, cadmium apatites, and so on.

(5) nashicon-type compounds

These materials include, for example, $(H_3O)Zr_2(PO_4)_3$. In the present invention, it is also possible to use nashicon-type compounds in which $H_3O$ is substituted by Na.

(6) clay minerals

These materials are, for example, montmorillonites, sepiolites, bentonites, and other minerals. Of these, the sepiolite is particularly preferable.

(7) potassium titanates

These are expressed by general formula $aK_2O \cdot bTiO_2 \cdot nH_2O$ (a is a positive number satisfying $0 < a \leq 1$, and b denotes a positive number satisfying $1 \leq b \leq 6$, and n is a positive number), for instance, including $K_2 \cdot TiO_2 \cdot 2H_2O$, $K_2O \cdot 2TiO_2 \cdot 2H_2O$, $0.5K_2O \cdot TiO_2 \cdot 2H_2O$, $K_2O \cdot 2.5TiO_2 \cdot 2H_2O$, and so on. Of these compounds, the compounds in which a or b is not integer can easily be produced with the compounds in which a or b is an integer being acidificated and K being substituted by H.

(8) heteropolyacid salts

These are expressed by general formula $H_3AE_{12}O_{40} \cdot nH_2O$ (A is a phosphorus, arsenic, germanium, or silicone, and E denotes a molybdenum, tungsten, or vanadium, and n indicates a positive number), for example, including ammonium molybdophosphates, and ammonium tungstophosphates.

(9) insoluble ferrocyanides

These are expressed by a general formula $M_{b-pxa}A[E(CN)_6]$ where M is an alkali metal or hydrogen ion, A is a heavy metal ion such as lead, copper, nickel, cobalt, manganese, cadmium, iron (III) and titanium, E denotes iron (II), iron (III) cobalt or the like, b is 4 or 3, a indicates the valency of A, and p stands for a positive number of 0 to b/a, for example including insoluble ferrocyan compounds such as $Cs_2Zn[Fe(CN)_6]$ and $K_2Co[Fe(CN_6]$.

The above-mentioned inorganic ion exchangers in (1) to (6) have a OH group, and include substitution type ion exchanges in which a portion or all the ions present in the ion exchange site of these inorganic ion exchangers are substituted by another ions. That is, if the aforesaid inorganic ion exchangers are expressed by R-M$^1$ (M$^1$ is the ionic species in the ion exchange site), the present invention includes a substitution type inorganic ion exchanger in which a portion or all of M$^1$ of R-M$^1$ is substituted by an ionic species M$^2$ different from the M1. That is,

$$xR - M^1 + yM^2 \rightarrow Rx - (M^2)y + xM^1$$

where x and y each represents the valencies of ionic exchange species M$^2$ and M$^1$, respectively.

Depending upon the kind of the inorganic ion exchanger having an OH group, M$^1$ is generally H$^+$ in a case where the inorganic ion exchanger shows the cation exchangeability. In this case, M$^2$ can arbitrarily selected from metallic ions such as an alkali metal, alkaline earth metal, polyvalent typical metal, transition metal, and rare earth metal, other than H$^+$. In the case that the inorganic ion exchanger having the OH group indicates anion exchangeability, M$^1$ is generally OH$^-$, and in this case, M$^2$ is any one of anions other than OH$^-$ which include, for example, I, Cl, SCN, $NO_2$, Br, F, $CH_3COO$, $SO_4$, $CrO_4$, composite ions, and so on.

Moreover, in the inorganic ion exchangers in which, being once lost due to the high-temperature heating process, the OH group is again added through the water-submerged process or the like, the inorganic ion exchanger after the high-temperature heating processing is also one of the inorganic ion exchangers usable in the present invention, for example, nashicon-type compounds such as the materials obtained by heating, at a high temperature (500 to 700°C), hydrotalcite and $HZr_2(PO_4)_3$ obtainable by heating $(H_3O)Zr_2(PO_4)_3$. One or a plurality of one of these inorganic ion exchanges can be used as the surface layer. As the inorganic ion exchangers, hydroxides of polyvalent metals or acid salts of polyvalent metals are particularly preferable.

As the other inorganic EA materials 32 suitable for the surface layers 33 of the EA particles 30, there are metal oxides, metallic hydroxides, hydroxides of metal oxides, inorganic ion exchangers, one of these materials metal-doped, one of these materials placed as the electrical semiconductive layer on another carrier regardless of metal doping, and so on, which have electric conductivities of $10^3\ \Omega^{-1}/cm$ to $10^{-11}\ \Omega^{-1}/cm$

A further description will be made hereinbelow in terms of other inorganic EA materials. That is, there are:

(A) metal oxides: for example, $SnO_2$, amorphous type titanium dioxides (produced by Idemitsu Petrochemical Kagaku Co. Ltd.);

(B) metallic hydroxides: for example, titanium hydroxides, niobium hydroxides. The titanium hydroxides hydrous titanium oxides (produced by Ishihara Sangyo Co., Ltd.), metatitanic acid (another name: b titanic acid, $TiO(OH)_2$) and orthotitanic acid (another name: a titanic acid, $Ti(OH)_4$);

(C) hydroxides of metal oxides: for example, FeO(OH) (gacite);

(D) hydroxides of polyvalent metals: the same compounds as the aforementioned (1);

(E) hydrotalcites: the same compounds as the aforesaid (2);

(F) acid salts of polyvalent metals: the same materials as the foregoing (3);

(G) hydroxyapatites: the same materials as the foregoing (4);

(H) nashicon-type compounds: the same materials as the aforementioned (5);

(I) clay minerals: the same materials as the aforementioned (6);

(J) potassium titanates: the same materials as the aforesaid (7);

(K) heteropolyacid salts: the same materials as the foregoing (8);

(L) insoluble ferrocyanides: the same materials as the foregoing (9);

(M) metal-doped inorganic EA materials: for improving the electric conductivity of the aforementioned (A) to (L), a metal such as antimony (Sb) is doped into an inorganic EA material, for example, antimony-doped tin oxides ($SnO_2$); and

(N) inorganic EA materials placed as electrical semiconductive layers on other carriers: for example, among the carriers are inorganic particles made with titanium oxide, silica, alumina, silica-alumina or the like or organic high-molecular particles made with polyethylene, polypropylene or the like, and among the electrical semiconductive layer materials are antimony (Sb)-doped tin oxides.

The particles containing the inorganic EA material wholly become inorganic EA materials. The surface layer can simultaneously contain the two or more inorganic EA materials mentioned above.

For the electrical insulating medium 19 of the EA fluid 16, all the materials which have been used for the electric alignment fluids can be employed. As examples, there are diphenyl chlorides, butyl sebacates, aromatic polycarbonate higher alcohol esters, halophenyl alkyl ethers, transformer oils, paraffin chlorides, fluorine-based oils, silicone-based oils, fluorosilicone-based oils and others, although any fluid and mixture are usable as long as being chemically stable and allowing the stable dispersion of the EA particles.

The electrical insulating medium 19 can be colored if required. When coloring it, it is desirable to use an oil soluble dye or dispersion dye which is of the type that is soluble in the selected electrical insulating medium 19 and maintains the electrical characteristics. There is no problem even if a dispersing agent, surface active agent, viscosity controlling agent, antioxidant, stabilizer and so on are included in the electrical insulating medium 19.

The inorganic and organic composite particles (EA particles) 30 can be produced in various ways. As one example, there is a way in which the core body particles 31 made of an inorganic and organic composite compound and the fine particles made of an inorganic EA material 32 are carried by means of a jet stream to come into collision with each other. In this case, the inorganic EA fine particles 32 run into the surfaces of the core body particles 31 at a high speed, thus being fixed there to to form the surface layers 33 thereon. Another way is that the core body particles 31 are treated to float in a gas and a solution containing the inorganic EA material is sprayed toward the floating core body particles 31. In this case, after being adhered thereonto, the solution is dried to form the surface layers 33.

For production of the EA particles 30, the core bodies 31 and the surface layers 33 are preferable to be formed simultaneously. In this method, while the monomer of the organic high-molecular compound for forming the core bodies 31 is emulsion-polymerized, suspension-polymerized or dispersion-polymerized in a polymerization medium, the inorganic EA fine particles 32 are add to the monomer or the polymerization medium. The polymerization medium is preferable to be water, while a mixture of water and a water soluble organic solvent, and organic lean-solvent are also usable. According to this method, the monomer is polymerized in the polymerization medium to form core body particles, and at the same time the inorganic EA fine particles are aligned on the surfaces of the core body particles 31 so as to form surface layers 33 on the surfaces thereof, thus coating the core body particles 31.

In producing the inorganic and organic composite particles by means of the emulsion polymerization or suspension polymerization, a combination of the hydrophobic property of the monomer and the hydrophilic property of the inorganic EA material 32 allows most of the inorganic EA materials 32 to be aligned on the surfaces of the core body particles. According to the simultaneous formation method for the core bodies 31 and surface layers 33, the inorganic EA particles 32 can strongly and finely be adhered onto the surfaces of the core body particles 31 being made of a polymer compound, resulting in being firm inorganic and organic composite particles 30.

In the present invention, the EA particles 30 being used is not necessarily limited to spherical configurations, while, by means of the core body particle adjusting emulsion polymerization or suspension polymerization, the resultant EA particles 30 have substantially spherical configurations. If having the spherical configurations, as compared with other configurations it is advantageous in adjusting the transmitted light intensity because light can be scattered omnidirectionally.

Although the diameters of the EA particles 30 is not particularly limited, they are preferable to be 0.1 to 500 mm, particularly 5 to 200 mm. Further, although the diameters of the inorganic EA particles 32 are not particularly limited, they are preferable to be between 0.005 and 100 mm, more preferably between 0.01 and 10 mm.

In the EA particles 30, the weight ratio of the inorganic EA material 32 for formation of the surface layer 33 and the organic high-molecular compound for formation of the core body 31 is not particularly limited, while, for example, the weight ratio of (inorganic EA material):(organic high-molecular compound) is preferable to be in the range of (1 to 60):(99 to 40), particularly preferable to be in the range of(4 to 30):(96 to 70). If the weight ratio of the inorganic EA material 32 is below 1%, the resultant EA fluid 16 does not sufficiently show the EA effect. On the other hand, if exceeding 60%, an excessive current flows into the resultant EA fluid 16.

The specific gravity of the EA particles 30 can relatively be made small as compared with the EA material 32 for the formation of the surface layers 33, for that the organic high-molecular compound with a relatively small specific gravity can be used for the core bodies 31. The specific gravity of the EA particles 30 is freely adjustable with the kinds and ratios of the organic high-molecular compound and the inorganic EA material, while the specific gravity is generally set to be approximately 1.0 to 2.9 taking the electrical insulating medium to be used into consideration. If the difference in specific gravity between the EA particles 30 and the electrical insulating medium is large, the EA particles can sink in the medium, which makes difficult the uniform dispersion.

The surface layers 33 or core bodies 31 of the EA particles 30 can contain a dyestuff and a pigment for a coloration purpose. It is desirable that the pigment is mixed into the inorganic EA material 32 in forming the surface layers 33 being made of inorganic EA material 32 on the core bodies 31 in accordance with the foregoing method. For adding coloring matter into the core bodies 31, it is possible to use a pigment or dye known as the coloring matter for the synthetic resin. This coloring matter can be mixed in advance into the monomer for the formation of the core bodies 31 before the monomer is polymerized, or can be added to the synthetic resin for the formation of the core bodies 31. With the EA particles 30 in which at least one of the surface layer 33 and the core body 31 contains the coloring matter, the scattering light from the resultant EA fluid 16 without voltage can freely take various colors. For example, when a titanium hydroxide or silica gel is mixed thereinto, the EA fluid 16 shows white, and when a copper phthalocyanine blue (produced by Dainichi Seika Kogyo Co., Ltd., cyanine blue S-32) being a blue pigment is mixed thereinto, the EA fluid 16 can be colored in blue, and when a first yellow (NL first yellow 5G(S), produced by Dainichi Seika Kogyo Co., Ltd.) being a yellow pigment is mixed thereinto, the EA fluid 16 can be colored in yellow. In addition, when a black triiron tetraoxide ($Fe_3O_4$) being an electrical semiconductive inorganic matter is mixed thereinto, the EA fluid 16 can be colored in black, and when ferric oxide ($Fe_2O_3$) being an electrical semiconductive inorganic matter is mixed into, the EA fluid 16 can be colored in red. Accordingly, various picture words can be color-displayed using these materials.

In the EA particles 30 produced in the above-mentioned various ways, particularly, produced in the method in which the core bodies 31 and surface layers 33 can be simultaneously produced, a portion or whole of the surface layers 33 is covered with an organic high-molecular matter or thin films of additives such as dispersants and emulsifiers used in producing processes, whereby there is the possibility that the EA effect of the inorganic EA material 32 fine particles is unsatisfactorily shown.

The surface polishing of the EA particles 30 can be achieved in various ways. For instance, the EA particles 30 are dispersed in a dispersion medium such as water before stirred. In this case, it is also possible that abrasives such as sand particles and small balls can be mixed into the dispersion medium and stirred together with EA particles 30, or that the stirring is carried out using grinding stones. Moreover, it is also appropriate that the EA particles 30 are dry-stirred using the abrasives and grinding stones without being put in such a dispersion medium.

A more preferable polishing method is to stir the EA particles 30 by means of a jet stream or the like. The particles violently come into collision with each other due to the jet stream. As preferable points, this method does not require abrasives, and can easily separate the inert materials peeled from the particle surfaces in classification. In the case of the aforesaid jet stream stirring, although difficulty is experienced in some degree to determine the polishing conditions on the basis of the kind of the stirring apparatus, stirring speed, and the kind of the material of the inorganic and organic composite particles, it is generally desirable that, for example, the stirring speed is 6000 rpm and the stirring time is 5 to 15 minutes.

The EA fluid 16 in the present invention can be produced with the EA particles 30 and, if required, other components such as dispersants being stirred and uniformly mixed into the electrical insulating medium 19 described above. Any kind of stirring machine is usable which is generally used in order to disperse solid particles in a liquid dispersion medium.

A description will be made hereinbelow in terms of the EA particle concentration effective to the hazard display device according to the present invention, and further the kinematic viscosity of the electrical insulating medium 19 and the voltage being applied to the EA fluid.

The limitation is not particularly imposed on the concentration of the EA particles 30 in the electrical insulating medium 19, while it is preferable to be between 0.5% and 15% by weight. If the particle concentration is less than 0.5% by weight, the transmitted light control effect is sufficiently unobtainable. When exceeding 15% by weight, the particle density becomes excessively high, with the result that the transparency sensation is not sufficiently obtainable irrespective of the orientation control of the EA particles 30 by the electric field application (which will be described later).

Preferably, the kinematic viscosity of this electrical insulating medium 19 is designed to be 1 cSt to 3000 cSt. If the kinematic viscosity is below 1 cSt, the retention stability of the EA fluid lowers because of much volatile component, and on the other hand, if the kinematic is more than 3000 cSt, bubbles are generated therein and difficult to remove, thus providing troubles. That is, a discharge and spark take place at micro-areas of the bubbles at the time of the application of the electric field so that its insulating property deteriorates. For these reasons, the kinematic viscosity is preferable to be 10 cSt to 1000 cSt, particularly 10 cSt to 100 cSt.

Moreover, the voltage to be applied to the EA fluid 16 is in the range of 0.1 to 5.0 kV/mm, while a voltage higher than this range can also be applied thereto. The voltage being applied is preferable to be in the range of 0.25 to 1.5 kV/mm.

Secondly, a description will be made hereinbelow about the principle of controlling the transmitted light intensity and giving a display using the hazard display device A as shown in Fig. 1.

Fig. 3 shows a state in which a switch 24 is opened so as not to make an energization to the transparent conductive layers 17, 17. Since in this state an electric field is not applied to the EA particles 30, the EA particles 30 randomly float in the electrical insulating medium 19. When at this time light is incident on the housing 18, the light is scattered in random directions, with the result that the housing 18 takes an opaque state. For example, if a titanium hydroxide-based material is used as the inorganic EA material 32, the housing 18 becomes cloudy. Further, when a coloring matter is contained in at least one of the surface layers 33 and core bodies of the inorganic and organic composite particles, the housing 18 is colored with the coloring matter. In this case, if the EA particles have spherical configurations, the incident light is scattered in omnidirections but hardly scattered in a specific direction.

When as shown in Fig. 4 the switch 24 is closed so as to make an energization to the transparent conductive layers 17, 17, the EA particles 30 are vertically chain-linked with each other between the transparent conductive layers 17, 17, i.e., take chain structures 30' arranged in parallel to each other. That is, the ratio of the EA particles 30 dispersed in the electrical insulating medium 19 is a relatively small value below approximately 10% by weight as described before, and therefore, if they are oriented to establish chain structures, gaps considerably larger than the diameters of the EA particles 30 are produced between the chain structures, whereby the light incident on the housing 18 in its thickness direction (vertical direction) can pass into the housing 18 without hardly attenuating, which can make the housing 18 transparent.

With the foregoing operation of the switch 24, i.e., with the energization of the transparent conductive layers 17, 17, the housing 18 can turn from the opaque state into the transparent state, thus allowing a desirable display. This means that the hazard display devices A can be adopted to various picture word displays such as hazard warnings because of easily taking a transparent state in response to the power from a power supply. That is, the sections other than the transparent conductive layers 17, 17 become transparent so as to display the picture words. As shown in Figs. 1 and 2, the character or mark section (display section 40) being displayed is made opaque, while the sections (non-display sections 41) other than the display section 40 being the inner surfaces of the transparent conductive layers 17, 17 is made transparent. In this case, transparent conductive layers (non-display section transparent conductive layers 17a) in the non-display sections 41 are formed in opposed relation to each other, and an energization is made thereto. Thus, the EA particles in the non-display sections 41 are affected by an electric field so as to be chain-linked with each other to form the chain structures 30' in directions perpendicular to the non-display section transparent conductive layers 17a, 17a therebetween, with the result that the non-display sections 41 become transparent. Whereas, the EA particles in the display section remain in the randomly floating state to allow the incident light to be scattered and to permit the display section 40 to be opaque as it is. Thus, the display section 40 representative of a character or mark appears on the transparent glass plate.

On the other hand, for making the character section (display section 40) transparent, display section transparent conductive layers 17b (the transparent conductive layers 17) are formed in opposed relation to each other, and the energization is made thereto. Thus, the display section 40 receives the effect of the electric field to become transparent, with the result that the non-display sections 41 and the display section 40 turn transparent so that, for example, the rear windshield keeps the transparent state. In this embodiment, the non-display section transparent conductive layers 17a, 17a and the display section transparent conductive layers 17b, 17b are made to be individually operated to carry out the separate displays, and hence the non-display section transparent conductive layer 17a and the display section transparent conductive layer 17b are arranged to be spaced from each other.

Since the hazard display device according to this embodiment can be driven with a voltage of 0.1 to 5.0 kV/mm and with an extremely small current of a maximum of several mA/m$^2$, a power of 10 W/m$^2$ is enough to drive it, thus constituting an energy-saving system. In addition, since the EA particles 30 can substantially make the chain structures simultaneously with the energization to the transparent conductive layers 17, 17, a sufficient responsibility is obtainable. Moreover, if the transmitted light quantity control is made through the EA fluid 16, since the transmitted light intensity is uniformly controllable over all the wavelength areas with no occurrence of absorption of specific light, there is no possibility of heating due to the light absorption, thus providing an energy-saving hazard display device. Furthermore, since the EA particles 30 remain in the same state for a while even if the application of the voltage is cut off alter being once oriented in response to the application of the electric field, it is possible that the voltage could be intermittently applied to the transparent conductive layers 17, 17, thus allowing more energy-savings.

The retention time of the orientation of the EA particles 30 at no application of an electric field is appropriately adjustable through the kind of the EA particles 30 itself and the kinematic viscosity of the electrical insulating medium 19. That is, if the kinematic viscosity of the electrical insulating medium is low, the retention time decreases, and on the other hand, if being high, the retention time increases.

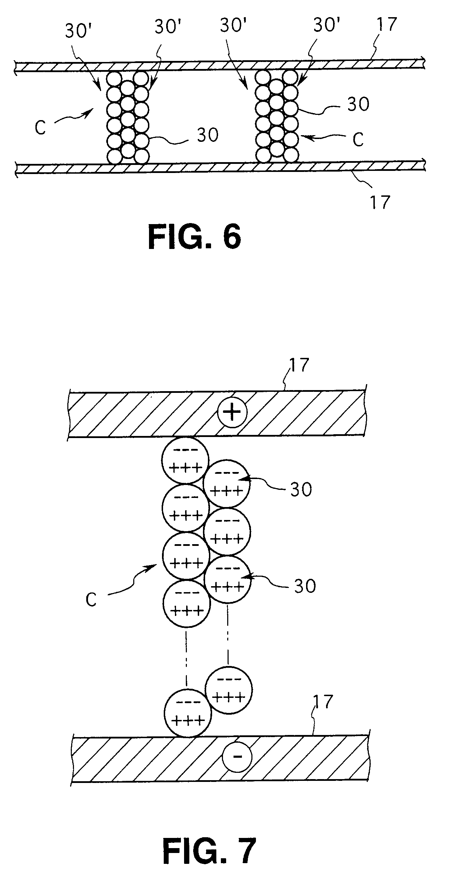

Although in the present invention the inorganic and organic composite particles 30 turn into single-chain configurations which in turn, are arranged in parallel to each other when an electric field is applied thereto, if the quantity of the inorganic and organic composite particles 30 increases to exceed 1% by weight, a plurality of chain configurations 30' are joined with each other to organize columns C as shown in Fig. 6. In each column C, the EA particles 30 of the adjacent chain configurations are longitudinally shifted by one from each other. As to this phenomenon, the inventors assume that the EA particles 30, dielectric-polarized into + pole portions and - pole portions as shown in Fig. 7, becomes more stable in energy when being alternately adjacent to each other due to the attraction between the + pole portions and the - pole portions.

Accordingly, in cases where the content of the EA particles 30 is large, a number of columns C are produced between the electrodes, by which production the transmitted light intensity increases. In this case, since a number of EA particles 30 are grouped into a plurality of columns C, the separation between the adjacent columns C results in being large, which serves to increase the transmitted light intensity.

The reason why the diameters of the EA particles 30 are determined to be in the range of 0.1 to 500 mm, more preferably 5 to 200 mm, is that the EA particles 30 function as light scattering type particles or light reflection type particles. As well known, the wavelength of the visible light is in the range of 380 to 780 nm, that is, 0.38 to 0.78 mm, and for light with such a wavelength being scattered or reflected for transmitted light control purposes, the diameters of the EA particles 30 need to be at least more than 0.1 mm, more preferably over 5 mm. On the other hand, in a case where ultra-fine conductive particles having diameters smaller than the wavelengths of the visible light causing the Brownian motion, for example, having diameters of 5 nm to several tens nm (= 0.005 to 0.02 mm) are dispersed in the electrical insulating medium 19, the orientation of the ultra-fine particles is considered possible, while in this case the light transmission mechanism is totally different from that in the present invention, with the result that the ultra-fine particles are dispersed in a state with no electric field so as to completely permit the transmission of light and are oriented in a state with application of an electric field so as to scatter and attenuate light. That is, undesirable and totally different behaviors take place.

Furthermore, TiBaO$_4$ particles are considered as the foregoing ultra-fine conductive particles, while the specific gravity of TiBaO$_4$ is as great as being in the range between 4 and 6. Supposing that the TiBaO$_4$ particles are made to be large in diameter for the light reflecting purposes, they gravitationally sink for the difference in specific gravity from the electrical insulating medium 19, whereby difficulty is encountered to uniformly disperse the particles. In addition, for uniformly dispersing the TiBaO$_4$ particles in the electrical insulating medium 19, the electrical insulating medium 19 needs to be large in specific gravity, while the electrical insulating medium with a specific gravity of approximately 4 to 6 does not exist in the world. On the other hand, the necessary specific gravity of the inorganic and organic composite particles 30 in the present invention is readily adjustable to around 1.2 as described above, which allows the utilization of various kinds of electrical insulating media.

Secondly, considering the coloring aspect, difficulty is experienced in coloring the foregoing ultra-fine particles, and even assuming that the coloring is possible, the diameters of the particles are too small, for which reason the ultra-fine particles dispersed in the electrical insulating medium 19 is impossible to visibly color. Accordingly, the use of the ultra-fine particles makes only the color of the electrical insulating medium 19 appear. That is, the practicable coloring pattern is just one. For instance, only the variation between transparent red and opaque red is practicable.

Whereas, according to the present invention, for example, in a case where the medium is designed to be transparent and red in color and the EA particles are made of be white in color, the color variation between cloudy transparency and red transparency is practicable. Further, in a case where the medium is colorless and transparent and the EA particles are blue in color, the color variation between blue transparency and colorless transparency. Moreover, in the case that the medium is red and the EA particles are blue, the color variation takes place between purple transparency and red transparency. Still further, in the case that the medium is light blue and the EA particles are yellow, the color variation takes place between opaque yellowish green and light blue transparency. In addition, taking notice of the portions to be colored, the coloring of both the core bodies 31 and surface layers 33 of the inorganic and organic composite particles 30 and the electrical insulating medium 19 is possible, and the color variation is easy. The surface of the core body 31 of each of the inorganic and organic composite particles 30 is covered with an inorganic matter, and since the color is exposed from the gaps between the inorganic matters, the color of the core body 31 colored is effectively reflexible relative to the color of the EA fluid.

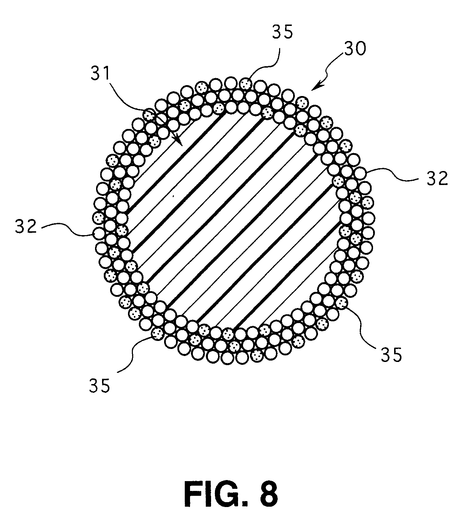

Furthermore, for coloring the surface layers 33 of the EA particles 30, a coloring inorganic pigment can be mixed evenly by a necessary quantity into the inorganic and organic composite particles to be used in producing the EA particles 30. In the EA particles thus produced, as shown in Fig. 8, some of inorganic matter particles adhered to the periphery of the core body 31 are replaced with the coloring inorganic pigments 35. Thus, the coloring of the inorganic and organic composite particles becomes possible. In the case of the hazard display device according to the present invention, the employment of the EA particles 30 with a red pigment is desirable.

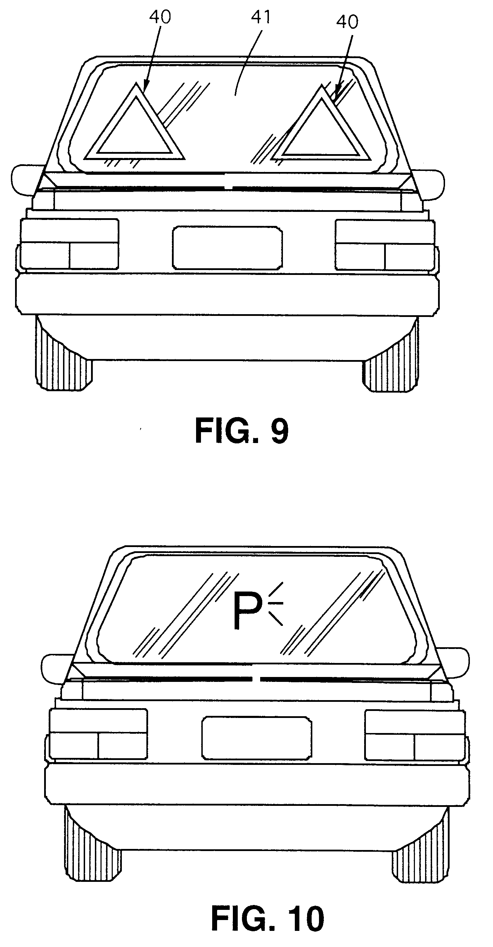

Although in this embodiment one substantially equilateral triangle hazard warning picture word is formed on the rear windshield, it is also possible that two picture words are formed as shown in Fig. 9. In this case, it is also appropriate that the two picture words are linked with the right and left-hand direction indicating flashers of an automobile. With the linking with the direction indicating flashers, the picture word is usable together with the ordinary direction indicating flashers. For example, if a had display is made on a highway before the driver is away from the automobile for telephone communications, it is possible to alert other motorist of the parked car and to prevent other automobiles from coming into collision therewith. The power required is several Watts, and one direction indicating flasher requires approximately 20 Watts. Thus, the load on the car battery is extremely small. Moreover, it is also possible to form picture words such as parking marks as shown in Fig. 10, in addition to the hazard warning.

When the hazard display device is applied to an automobile, a hollow housing having two opposed surfaces, portions of which are transparent, is fitted in at least a portion of the rear windshield of the automobile, and an EA fluid produced by dispersing EA particles in an electrical insulating medium is packed in the housing. In this case, a display section and non-display section are formed in the opposed transparent sections of the housing, and non-display section transparent conductive layers are respectively formed on the opposed transparent sections of the non-display section, while display section transparent conductive layers are respectively formed on the opposed transparent sections of the display section. These display section transparent conductive layers are made to have picture word configurations indicative of the stopping of automobiles. At this time, the non-display section transparent conductive layers and the display section transparent conductive layers are spaced from each other. When energizations are made to the non-display section transparent conductive layers and the display section transparent conductive layers, both the display section and non-display section become transparent. On the other hand, if the energization is made only to the display section transparent conductive layers, the picture word can appear in the display section.

According to this embodiment, as compared with the activation of the hazard lamps, the consumption of the car battery can be reduced because an electric field is merely applied to the transparent conductive layers. In addition, since the picture word can be displayed at a place (rear windshield) different from the hazard lamp positions, it is possible to prevent contusion with the hazard lamps acting as direction indicators.

Furthermore, the picture word display on the windshields and the like can eliminate the requirement of the carrying of a triangular display plate, which makes it possible to effectively use the interior space of the automobile. In addition, since there is no need for the triangular display plate to be located on the road, the security for the drivers improves. Further, since the picture word is displayed on the rear windshield of an automobile, if a reverse lamp is placed in the inside and at the vicinity of the rear windshield, the display of the picture word is possible though the lighting of the reverse lamp at night. Still further, since the picture word can be displayed on the whole surface of the rear windshield, the visibility of the picture word improves.

The hazard display device according to this embodiment has a simple structure and hence, can be manufactured at a cost considerably lower than that of conventional liquid crystal display devices. For example, the cost of the foregoing EA fluid is below 1/10 of the cost of the liquid crystal material. In addition, the liquid crystal device requires various control circuits and LSIs, while the hazard display device according to this embodiment basically requires only a switch and wirings.

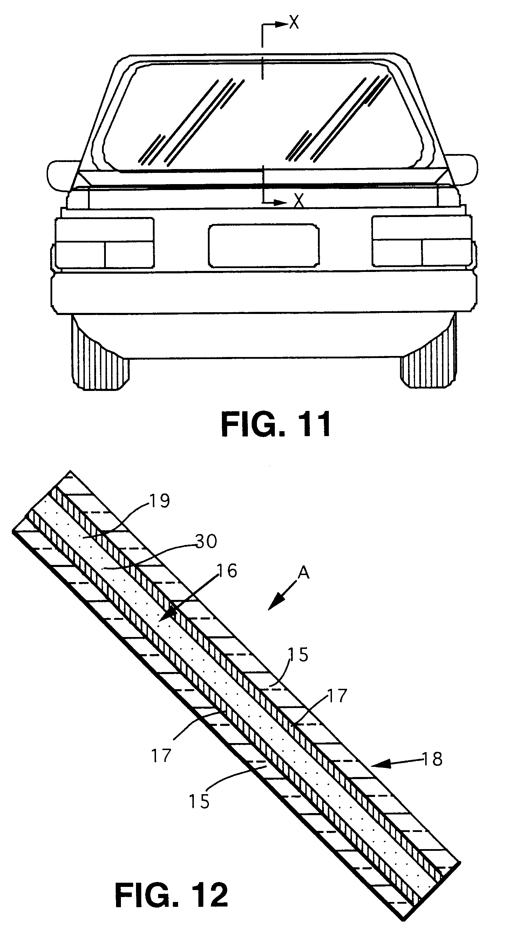

Secondly, a description will be made hereinbelow in terms of a second embodiment of the present invention. Fig. 11 is a front elevational view showing a transmitted light intensity control device used as a sunscreen device useful for automobiles, and Fig. 12 is a cross-sectional view taken along a line X-X in Fig. 11, where parts corresponding to those in Figs. 1 and 2 are marked with the same reference numerals. In Figs. 11 and 12, the sunscreen device A is constructed such that a pair of transparent substrates (plates) 15, 15 having transparent conductive layers 17 are disposed in parallel to each other to be spaced by a given distance from each other, and an EA fluid 16 is sealed therebetween. A sealing member, not shown, is attached onto the circumferential edge sections of the transparent substrates 15, 15 so as to form a plate-like hollow transparent housing 18 which contains the EA fluid 16 therein. Similarly, as shown in Figs. 3 and 4 the electrode sections electrically coupled to the transparent conductive layers 17, 17 are connected through a switch 24 to a power supply 23. In addition, as described in the foregoing first embodiment the transparent substrates 15, 15 are preferable to be made up of transparent glass plates or transparent resin plates and may be constructed with a frame section and a transparent plate section. The EA fluid 16 is the same as that in the first embodiment, and the description thereof will be omitted for brevity. Moreover, the principle of the transmitted light intensity control based on the EA fluid 16 in the sunscreen according to this embodiment is basically similar to that in the first embodiment, and the description there of will also be omitted for simplicity.

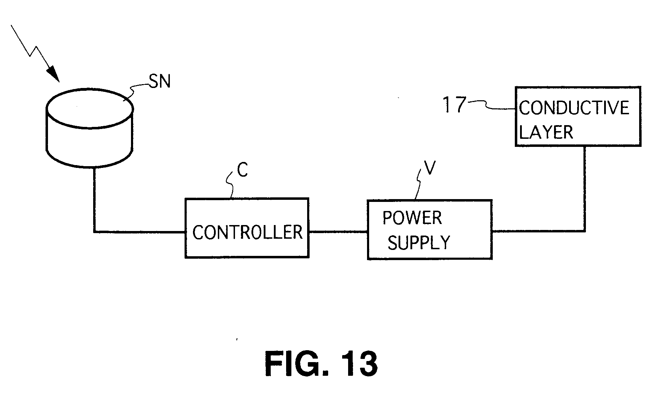

When the sunscreen device with the above-described arrangement is applied to a rear windshield of automobiles and the like, the rear windshield can selectively take an opaque state and transparent state through the on/off control (switch 24 control) of the power from a power supply (23). In this embodiment, as shown in Fig. 13 an optical sensor SN is set in the exterior of an automobile so that a controller C controls the voltage to be applied to the transparent conductive layers 17 on the basis of the detection results of the optical sensor SN. In other words, the controller C controls the output of a power supply V which applies a voltage to the transparent conductive layers 17, thus controlling the transparency of the rear windshield of the automobile. This arrangement allows the transparency of the rear windshield of an automobile to be automatically controlled in accordance with the strength of light from the outside of the automobile. In this case, the sunscreen device can also function as an energy-saving system as described in the first embodiment. In addition, the sunscreen device according to this embodiment can be produced at an extremely lower cost as compared with the conventional liquid crystal device like the hazard display device according to the foregoing first embodiment.

According to this embodiment, for controlling the sunlight intensity coming into an automobile, a hollow housing comprising two opposed surfaces, at least portions of which are transparent, is fitted in a rear windshield of the automobile, the transparent surfaces having transparent conductive layers disposed in opposed relation to each other and the housing being filled with the EA fluid mentioned above. When a voltage is applied to the transparent conductive layers, the housing takes a transparent state, and on the other hand, when being not applied thereto, the housing takes an opaque state, thus easily accomplishing the sunscreen function on the basis of the energization condition without requiring curtains, light-shielding films and so on. In addition, this sunscreen device can take in the sunlight in accordance with the quantity of the sunlight from the outside. The application of this embodiment is not limited to the rear windshield, this embodiment is also applicable to sunroofs, side windows, door windows and the like which receive the sunlight.

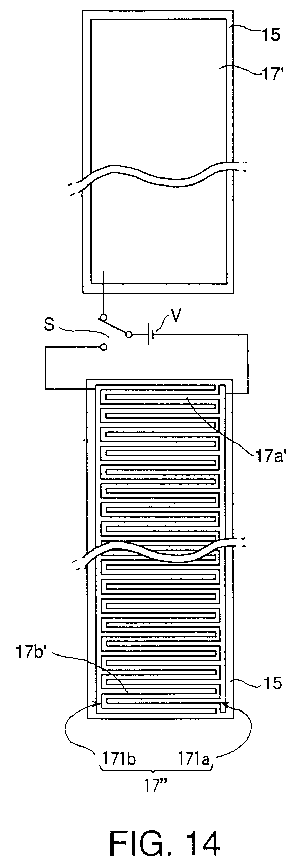

Furthermore, a description will be made hereinbelow with reference to Fig. 14 in terms of a third embodiment according to the present invention. The difference of this third embodiment from the aforementioned second embodiment is the configurations of transparent conductive layers. As shown in Fig. 14, one transparent conductive layer 17' of two opposed conductive layers of a housing 15 is formed on one inner surface of the housing 15 to substantially cover the whole thereof, while the other transparent conductive layer 17" is formed on the other inner surface of the housing 15 to substantially cover the whole thereof. The other transparent conductive layer 17" is composed of a first comb-like section 171a and a second comb-like section 171b, and tooth portions 17a' of the first comb-like section 171a are alternately located or inserted in spaces or gaps between tooth portions 17b' of the second comb-like section 171b. That is, the first and second comb-like sections 171a and 171b substantially covers the whole of the other inner surface of the housing 15. The tooth portions 17a' of the first comb-like section 171a and the tooth portions 17b' of the second comb-like section 171b extend in the width directions of the housing 15 and arranged alternately in the longitudinal direction thereof.

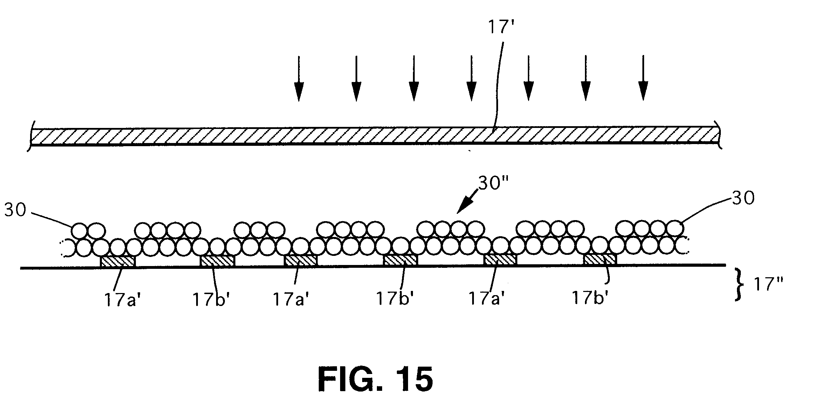

The first comb-like section 171a is connected through a power supply V to one contact (fixed contact) of a switch S, and the other contact (movable contact) of the switch S is selectively connected to one of the one transparent conductive layer 17' and the second comb-like section 171b. When, the switch S comes into connection with the one transparent conductive layer 17', the EA particles 30 are aligned vertically to form chain structures 30' or columns C as shown in Figs. 4 and 7. Accordingly, the housing 15 turns from an opaque state into a transparent state and the quantity of the light passing through the housing 15 increases. On the other hand, when the switch S is switched to the second comb-like section 171b side, as shown in Fig. 15 the EA particles 30 are oriented between the tooth portions 17a' of the first comb-like section 171a and the tooth portions 17b' of the second comb-like section 171b along the surfaces of the housing 15 so as to form a surface-like structure 30". Thus, the sunlight incident on the one surface of the housing 15 is shielded by the surface-like structure 30", with the result that the housing 15 inhibits the transmission of the sunlight and turns into a very cloudy state. As described above, the quantity of the light incident into the automobile can easily and quickly be controlled through the operation of the switch S.

## Manufacturing Examples

A detailed description will be made hereinbelow in terms of manufacturing examples of the devices according to the present invention.

A transparent conductive layer made of an ITO (indium tin oxide) film was formed on a glass plate, serving as a portion of a rear windshield of an automobile afterwards (for example, for manufacturing the hazard display device, as shown in Fig. 1 a display section is made to have a substantially equilateral triangle configuration and non-display sections were formed at both the inside portion and peripheral portion of the triangle configuration). Two glass plates with the ITO films, which plate had a thickness of 1.0 mm, were prepared and disposed so that the transparent conductive films were disposed in parallel and in opposed relation to each other and spaced by 2 mm from each other. Thereafter, the circumferential sections of the glass plates were sealed with a sealing member made of a resin before an EA fluid was poured from a through-hole formed in the sealing member and this through-hole was closed after the completion of the pouring of the EA fluid, thus producing the transmitted light intensity control devices.

The production example of the EA fluid used is as follows.

A mixture of a titanium hydroxide (common name: hydrous titanium oxide produced by Ishihara Sangyo Co., Ltd., C-II), a butyl acrylate, a 1,3-butylene glycol dimethacrylate and a polymerization initiator was dispersed in water containing a tertiary calcium phosphate as a dispersing stabilizer and suspension-polymerized while being stirred at a temperature of 60°C for one hour. The resultant product was filtered and acid-cleaned before water-cleaned and dried, thus obtaining inorganic and organic composite particles. Thereafter, using a jet stream agitator (hybridizer, manufactured by Nara Kikai Seisakusho Co., Ltd.), the inorganic and organic composite particles obtained were agitated with jet stream, before surface-polished, thereby producing the inorganic and organic composite particles. The specific gravity of the produced particles was 1.157, the average diameter there of was 13.7 mm. The particles were uniformly dispersed in silicone oils (produced by Toshiba Silicone Co., Ltd., TSF451 series) with various kinematic viscosities so that its inclusion takes various weight % rates, thus obtaining the EA fluids in which the kinematic viscosity of the electrical insulating medium (silicone oil) is fixed and the particle concentration takes various values, and further EA fluids in which the particle concentration is fixed and the kinematic viscosity of the electrical insulating medium takes various values.

Experimental Results

Experiments of the transmitted light intensity were made using the foregoing various EA fluids. In these experiments, the strength of the light incident on a housing and the strength of the light passing there through were detected by means of optical sensors. The comparison values were expressed in dMm as the increase of light (increasing light). In this case, the increase by 3.2 dBm indicates the increase by 2.09 times in optical power and the increase by 4.2 dBm means the increase by 2.63 times in optical power.

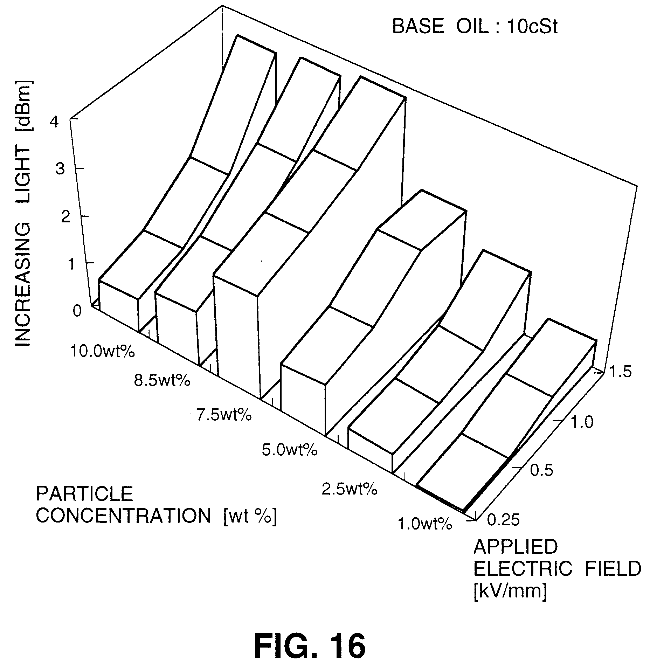

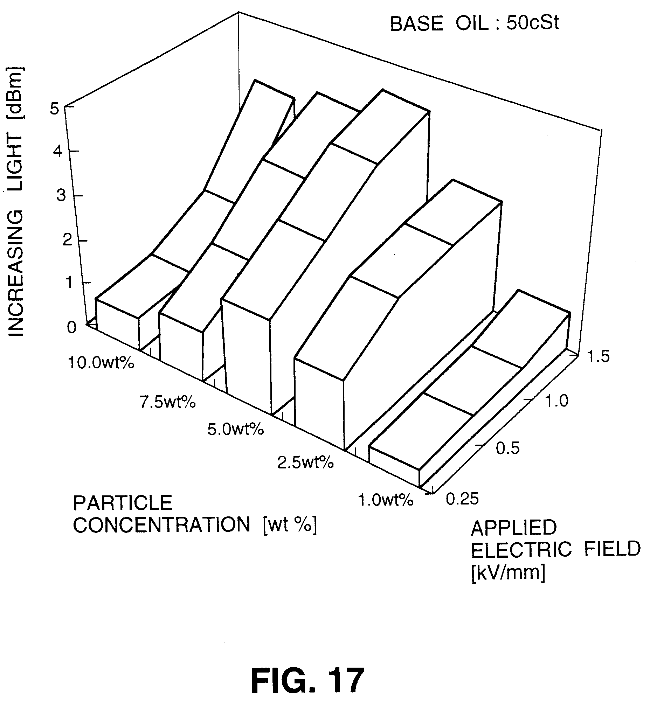

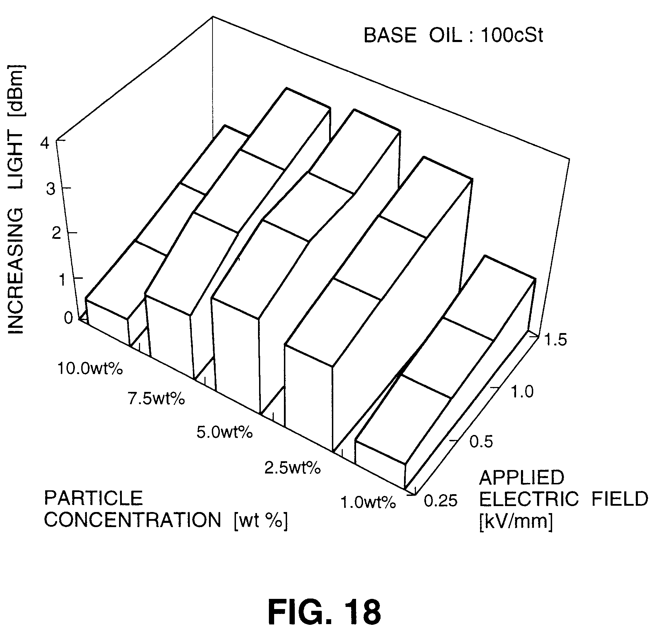

Fig. 16 shows the measurement results of the increasing light in accordance with the parameters of the concentration (percent by weight) of the inorganic and organic composite particles and the applied electric field strength (kV/mm) in the case that the kinematic viscosity of the silicone oil (base oil) was 10 cSt. Fig. 17 shows the experimental results thereof in the case that the kinematic viscosity of the silicone oil was 50 cSt, and Fig. 18 shows the experimental results there of in the case that the kinematic viscosity of the silicone oil was 100 cSt.

From the results shown in Figs. 16 to 18, when the electric field strength varied from 0.25 kV/mm to 1.5 kV/mm at a EA particle concentration of 0.5 to 15% by weight, in every case the dBm value of the increasing light increased in accordance with the increase in the electric field strength. Thus, the present invention can effectively carry out the transmitted light control. In the case that the particle concentration was 1.0% by weight, even if the electric field strength was 3 kV/mm, the increasing light ratio resulted in being small. For this reason, it was found that the particle concentration was preferable to be over 2.5% by weight.

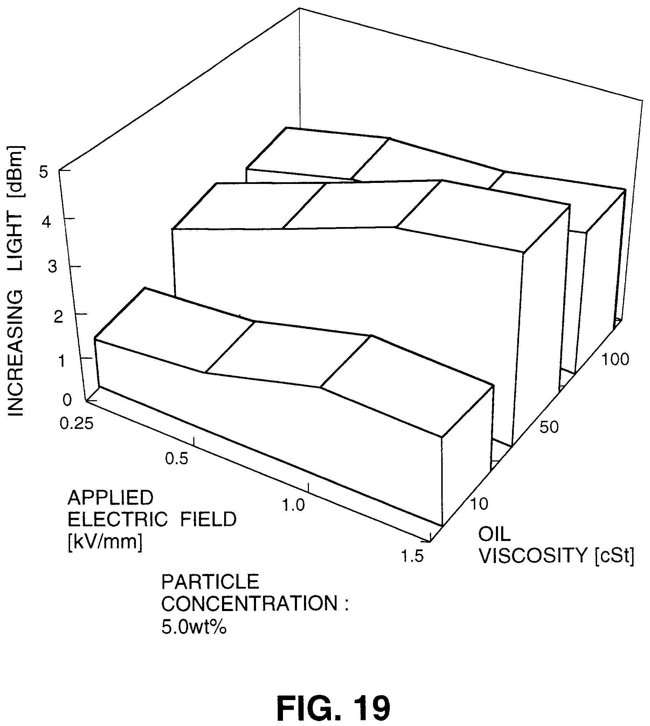

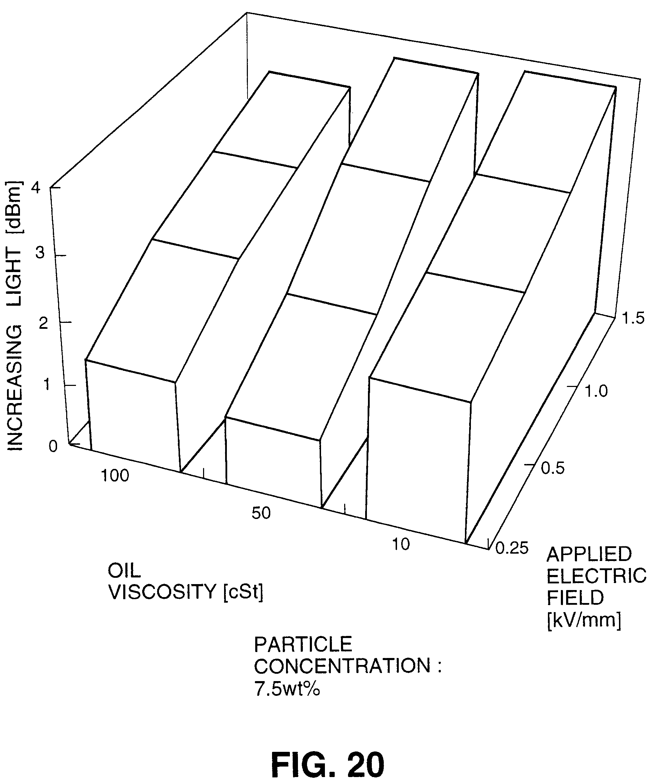

Fig. 19 shows the measurement results of the increasing light (dB) in accordance with the parameter of the kinematic viscosity of the silicone oil and the electric field strength in the case that the particle concentration is fixed to 5.0% by weight, and Fig. 20 shows the experimental results thereof in the case that the particle concentration is fixed to 7.5% by weight. From the results shown in Figs. 19 and 20, irrespective of kinematic viscosity, the dBm value of the increasing fight increased as the applied voltage increased in the range of 0.5 to 3 kV/mm. Accordingly, it was found that the control of the transmitted light intensity control was possible by the embodiments of the present invention, besides a larger increasing light was obtainable as the application voltage increased in the range of 0.25 to 1.5 kV/mm.

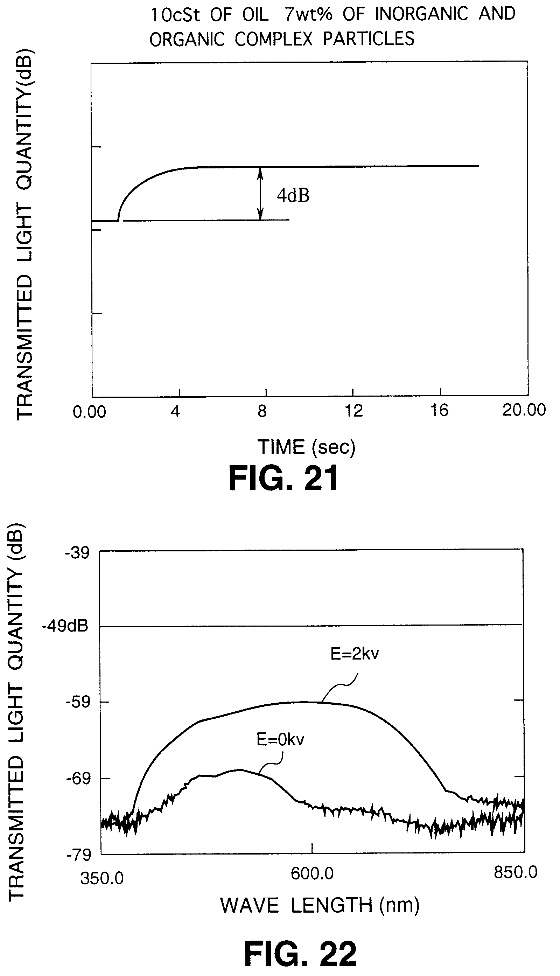

Fig. 21 shows the relationship between the energization time to the electrodes and the variation of the transmitted light intensity using an EA fluid in which 7% by weight of inorganic and organic composite particles are dispersed in a silicone oil whose kinematic viscosity is 10 cSt. For the measurement of the transmitted light intensity, light was projected to a transparent glass housing containing an EA fluid from a light source placed above the housing and an optical sensor was located under the housing to obtain the light and analyze the light power. As obvious from this illustration, the transmitted light intensity started to increase simultaneously with the energization made when approximately 1 second was elapsed after the start of the measurement and reached a maximum after the elapse of 3 to 4 seconds and became stable.

Fig. 22 illustrates the relationship between the transmitted light intensity and the wavelength in the case that the transmitted light intensity was measured using the EA fluid in which 4% by weight of EA particles colored in blue were dispersed in a silicone oil having a kinematic viscosity of 10 cSt. For the coloring the EA particles, 20% by weight of the inorganic EA material for constituting the surface layers was substituted by a blue pigment during the production of the EA particles. In the illustration, the curve of E = 0 kV indicates the transmitted light intensity at no application of the electric field, and the curve of E = 2 kV indicates the transmitted light intensity at application of the electrical potential of 2 kV to the electrodes. As obvious from the comparison between both the curves in Fig. 22, the flue EA fluid allows much transmission of blue light with a short wavelength at no application of the electric field, while permits light transmission in a wide wavelength range at application of the electric field, in other words, the EA fluid turns from the blue-colored state into the transparent state.

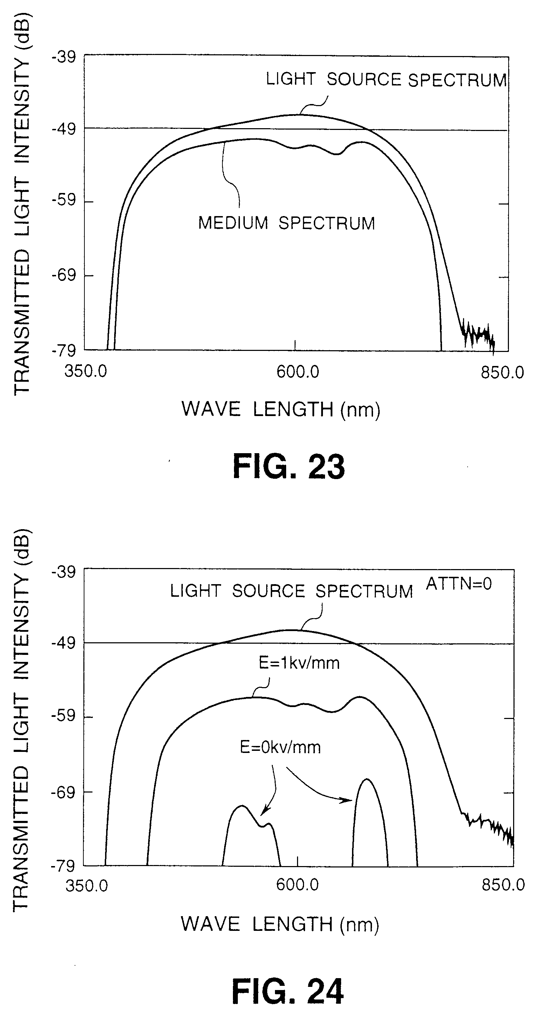

Fig. 23 shows the wavelength dependence of the transmitted light intensity in the case of the measurement of the transmitted light intensity of only an electrical insulating medium (not including the EA particles) made of a dimethyl silicone oil containing 0.1% by weight of a blue dye. This electric insulating medium appears to be light blue when been seen with the naked eye. In Fig. 23, comparing the light source spectrum with the medium spectrum, the light absorption occurred at portions other than the blue spectrum portion of short wavelengths. It is obvious from this that the electrical insulating medium permits much transmission of blue and, hence, is blue in color.

Fig. 24 shows the wavelength dependence of the transmitted light intensity in the case of the measurement of the transmitted light intensity of the EA fluid in which 5% by weight of yellow-colored EA particles are dispersed in an electrical insulating medium made of a dimethyl silicone oil containing 0.1% by weight of a blue dye. The coloring of the inorganic and organic composite particles was done in the same manner as in the aforementioned example except for use of a yellow pigment. Shown in Fig. 24 are a light source spectrum, transmitted light spectrum at E = 0 kV/mm, and transmitted light spectrum at E = 1 kV/mm. From the illustration, the EA fluid is opaque and greenish yellow being the mixed color of flue and yellow at no application of the electric field thereto, while turning into a blue transparent state close to colorless transparency at application of the electric field thereto. Accordingly, the EA fluid can take various color variations including transparent states in different color, transparent states in same color and colorless transparent states.

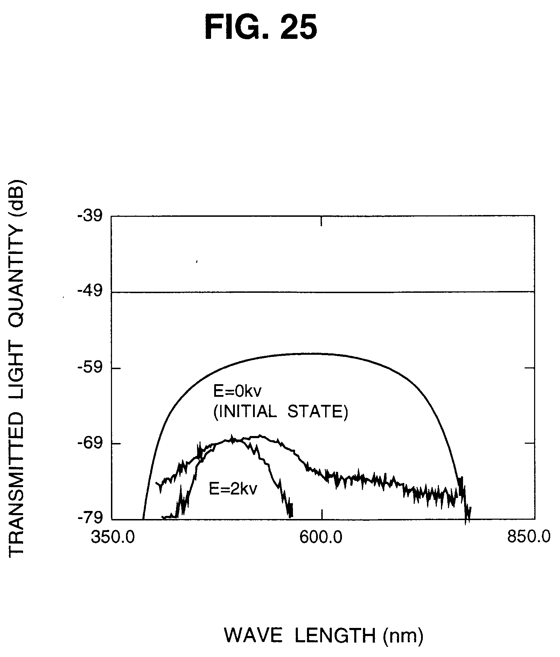

Fig. 25 shows the wavelength dependence of the transmitted light intensity in the case of establishing the switching connection and no switching connection of the switch S in Fig. 14. The measurement was made using the EA fluid in which 4% by weight of blue-colored EA particles were dispersed in a silicone oil having a kinematic viscosity of 10 cSt. The coloring of the EA particles was effected with 20% by weight of the inorganic EA material for the formation of the surface layers of the EA particles being substituted by a blue pigment. In the illustration, the curve of E = 0 kV shows the transmitted light intensity and the curve of E = 2 kV indicates the transmitted light intensity when a potential of 2 kV is applied to the electrodes. More specifically, the uppermost curve indicated with E = 2 kV shows the transmitted light intensity in a case where in Fig. 14 the first comb-like section 17a is connected through the switch S to the one transparent conductive layer 17'. As obvious from this curve, the light can pass into the housing 15 over a wide wavelength range because the EA particles are vertically oriented between the tooth portions 17a' of the first comb-like section 17a and the one transparent conductive layer 17'. The middle curve shows a state in which the switch S does not come into the connection state, that is, in which the EA particles randomly float and disperse in the silicone oil. Further, the lowermost curve shows the transmitted light intensity in the case that in Fig. 14 the first comb-like section 17a is connected through the switch S to the second comb-like section 17b. As obvious from this curve, the EA particles are oriented along the surfaces of the housing 15 between the tooth portions 17a' of the first comb-like section 17a of the tooth portions 17b' of the second comb-like section 17b so as to make the surface-like structure 30" as shown in Fig. 15, thus allowing the transmission of light with many wavelengths.

The following Tables 1 and 2 show the measurement results[dBm] of transmitted light at every wavelength in the case that 5.0% by weight of EA particles are dispersed in a silicone oil (base oil) whose kinematic viscosity is 50 cSt. In this case, the average increasing light becomes 4.2 dBm.

Table 1

| Applied Electric Field Strength [kV/mm] | Measurement Wavelength[nm] | | | | | | | |
|---|---|---|---|---|---|---|---|---|
| | 400 | 500 | 600 | 700 | 800 | 900 | 1000 | 1100 |
| Initial State | -18.4 | -19.5 | -20.7 | -21.5 | -22.1 | -22.5 | -22.6 | -16.9 |
| 0 | 0.53 | -0.61 | -1.76 | -2.59 | -3.13 | -3.55 | -3.69 | 2.09 |
| 0.25 | 2.66 | 1.50 | 0.34 | -0.51 | -1.00 | -1.41 | -1.54 | 4.22 |
| 0.5 | 3.50 | 2.37 | 1.25 | 0.39 | -0.16 | -0.55 | -0.70 | 5.02 |
| 1.0 | 4.38 | 3.25 | 2.12 | 1.25 | 0.69 | 0.30 | 0.18 | 5.93 |
| 1.5 | 4.72 | 3.63 | 2.48 | 1.64 | 1.08 | 0.72 | 0.60 | 6.36 |

Table 2

| Values at 1.5 [kV/mm] | 4.72 | 3.63 | 2.48 | 1.64 | 1.08 | 0.72 | 0.60 | 6.36 |
|---|---|---|---|---|---|---|---|---|
| Values at -)0[kV/mm] | 0.53 | -0.61 | -1.76 | -2.59 | -3.13 | -3.55 | -3.69 | 2.09 |
| Increasing Light[dBm] | 4.19 | 4.24 | 4.24 | 4.23 | 4.21 | 4.27 | 4.29 | 4.27 |

From the results shown in the Tables 1 and 2, in the control of the devices according to the present invention, uniform light transmission property is obtainable over a wide wavelength rage of 400 to 1100 nm, and uniform transmitted light intensity adjustment is possible over a wide wavelength area. The visible light has a wavelength range of 480 to 780 nm, and it includes the visible light and the infrared area longer in wavelength than the visible light. Thus, the transmitted light control of the device according to the present invention can cover a wide wavelength range.

It should be understood that the foregoing relates to only preferred embodiments of the present invention, and that it is intended to cover all changes and modifications of the embodiments of the present invention herein used for the purpose of the disclosure, which do not constitute departures from the concept and scope of the present invention.

## Claims

1. A hazard display device fitted in at least a portion of a motor vehicle for informing drivers of other motor vehicles of the presence of said motor vehicle, characterized by comprising:
   a hollow housing (18) having two surfaces (15) which are disposed in opposed relation to each other and at least a portion of each of which is transparent, a display section (40) and a non-display section (41) being formed in said transparent portions of said two opposed surfaces (15) of said housing (18);
   display section transparent conductive layers (17, 17b) formed on transparent opposed portions of said display section (40) so as to have a specific configuration indicative of a hazard mark;
   non-display section transparent conductive layers (17, 17a) formed on transparent opposed portions of said non-display section (41); and
   an electro-optical fluid composition (16) produced by dispersing electric alignment particles (30) in an electrical insulating medium (19) and packed within said housing (18).

2. A hazard display device as set forth in claim 1, characterized in that said non-display section transparent conductive layers (17, 17a) are formed to be separated from said display section transparent conductive layers (17, 17b).

3. A hazard display device as set forth in claim 1, characterized in that said specific configuration of said display section transparent conductive layers (17, 17b) is a substantially equilateral triangle representative of a picture word for hazard warning.

4. A hazard display device as set forth in any one of claims 1 to 3, characterized in that said electric alignment particles (30) are inorganic and organic composite particles each of which is composed of a core body (31) made of a polymer compound and a surface layer (33) including an inorganic matter (32) demonstrating an electric alignment effect.

5. A hazard display device as set forth in claim 4, characterized in that at least one of said surface layer (33), said core body (31) and said electrical insulating medium (19) contains a coloring matter (35).

6. A sunscreen device for a motor vehicle which controls the quantity of sunlight coming in said motor vehicle, characterized by comprising:
   a hollow housing (18) having two surfaces (15) which are disposed in opposed relation to each other and at least a portion of each of which is transparent;
   a first transparent conductive layer (17) formed on said transparent portion of one of said opposed surfaces (15) of said housing (18);
   a second transparent conductive layer (17) formed on said transparent portion of the other surface of said opposed surfaces (15) thereof, and
   an electro-optical fluid composition (16) produced by dispersing electric alignment particles (30) in an electrical insulating medium (19) and packed within said housing (18).

7. A sunscreen device as set forth in claim 6, characterized in that said first transparent conductive layer (17, 17') is formed to substantially cover the whole of said transparent portion of said one of said opposed surfaces (15) of said housing (18), and said second transparent conductive layer (17, 17") is composed of first and second comblike sections (171a, 171b) which substantially cover the whole of said transparent portion of said the other surface (15) of said housing (18), tooth portions (17a') of said first comb-like section (171a) being alternately placed in spaces between tooth portions (17b') of said second comb-like section (171b).

8. A sunscreen device as set forth in claim 6 or 7, characterized in that said electric alignment particles (30) are inorganic and organic composite particles each of which is composed of a core body (31) made of a polymer compound and a surface layer (33) including an inorganic matter (32) demonstrating an electric alignment effect.

9. A sunscreen device as set forth in claim 8, characterized in that at least one of said surface layer (33), said core body (31) and said electrical insulating medium (19) contains a coloring matter (35).

FIG. 1

FIG. 2

FIG. 3

FIG. 4

FIG. 5

**FIG. 6**

**FIG. 7**

FIG. 8

**FIG. 9**

**FIG. 10**

21

FIG. 11

FIG. 12

**FIG. 13**

FIG. 14

17'

30"

30

30

17a'   17b'   17a'   17b'   17a'   17b'

} 17"

**FIG. 15**

BASE OIL : 10cSt

**FIG. 16**

**FIG. 17**

BASE OIL : 100cSt

FIG. 18

FIG. 19

FIG. 20

10cSt OF OIL 7wt% OF INORGANIC AND
ORGANIC COMPLEX PARTICLES

**FIG. 21**

**FIG. 22**

**FIG. 23**

**FIG. 24**

# FIG. 25